# EUROPEAN PATENT APPLICATION

(11) **EP 2 659 971 A1**
(43) Date of publication of application: **06.11.2013**
(21) Application number: 11852917.1
(22) Date of filing: 28.12.2011
(51) Int. Cl.: B01J 29/40, C07C 4/06, C07C 15/04, C07C 15/06, C07C 15/067, C10G 11/05, C07B 61/00

(54) **CATALYST FOR PRODUCING MONOCYLIC AROMATIC HYDROCARBON AND METHOD FOR PRODUCING MONOCYCLIC AROMATIC HYDROCARBON**

(30) Priority: 28.12.2010 JP 2010294187
(71) Applicant: JX Nippon Oil & Energy Corporation, Chiyoda-ku Tokyo 100-8162 (JP)
(72) Inventor: YANAGAWA, Shinichiro, Tokyo 100-8162 (JP); KOBAYASHI, Masahide, Tokyo 100-8162 (JP); IWASA, Yasuyuki, Tokyo 100-8162 (JP)
(74) Representative: Elend, Almut Susanne
(86) International application number: PCT/JP2011/080418
(87) International publication number: WO 2012/091100

(57) **Abstract**

The catalyst for producing monocyclic aromatic hydrocarbons is for producing monocyclic aromatic hydrocarbons having 6 to 8 carbon number from oil feedstock having a 10 volume% distillation temperature of 140°C or higher and a 90 volume% distillation temperature of 380°C or lower. The catalyst includes crystalline aluminosilicate, phosphorus, and a binder, and the amount of phosphorus is 0.1 to 10 mass% based on the total mass of the catalyst.

## Description

### TECHNICAL FIELD

The present invention relates to a catalyst for producing monocyclic aromatic hydrocarbons that is for producing monocyclic aromatic hydrocarbons from oil containing a large amount of polycyclic aromatic hydrocarbons and a production method of monocyclic aromatic hydrocarbons.
Priority is claimed on Japanese Patent Application No. 2010-294187, filed December 28, 2010, the content of which is incorporated herein by reference.

### BACKGROUND ART

Light Cycle Oil (hereinafter, called "LCO") as cracked light oil that is generated by a fluidized catalytic cracking contains a large amount of polycyclic aromatic hydrocarbon and is used as light oil or heavy oil. However, in recent years, investigations have been conducted to obtain, from LCO, monocyclic aromatic hydrocarbons having 6 to 8 carbon number (for example, benzene, toluene, xylene, ethylbenzene and the like), which can be utilized as high octane value gasoline base materials or petrochemical feedstocks and have a high added value.
For example, Patent Documents 1 to 3 suggest methods for producing monocyclic aromatic hydrocarbons from polycyclic aromatic hydrocarbons that are contained in LCO and the like in a large amount, by using a zeolite catalyst.
However, Patent Documents 1 to 3 do not disclose that the yield of monocyclic aromatic hydrocarbon having 6 to 8 carbon number produced by the method is sufficiently high.

When monocyclic aromatic hydrocarbons are produced from heavy crude oil containing polycyclic aromatic hydrocarbons, catalyst regeneration for removing a carbonaceous substance needs to be performed with a high frequency since a large amount of carbonaceous substance is precipitated on the catalyst and rapidly decreases the activity. Moreover, when a circulating fluidized bed for performing a process of efficiently repeating reaction-catalyst regeneration is employed, the temperature for catalyst regeneration needs to be higher than the reaction temperature, so the temperature environment of the catalyst becomes more severe.
When a zeolite catalyst is used as a catalyst under such a severe condition, hydrothermal deterioration of the catalyst progresses, and the reaction activity decreases over time. Accordingly, the improvement of hydrothermal stability is required for the catalyst. However, for the zeolite catalyst disclosed in Patent Documents 1 to 3, a measure for improving hydrothermal stability was not taken, and the practical usefulness thereof was extremely low.

As the method for improving hydrothermal stability, a method using zeolite having a high Si/Al ratio, a method of stabilizing a catalyst by performing hydrothermal treatment in advance, such as in USY-type zeolite, a method of adding phosphorus to zeolite, a method of adding a rare-earth metal to zeolite, a method of improving a structure directing agent at the time of zeolite synthesis, and the like are known.
Among these, addition of phosphorus is known to have effects that improve not only the hydrothermal stability but also the selectivity resulting from inhibiting the precipitation of a carbonaceous substance during fluidized catalytic cracking, the abrasion resistance of a binder, and the like. Accordingly, phosphorus is frequently added to catalysts for a catalytic cracking reaction.

Catalysts for catalytic cracking that are obtained by adding phosphorus to zeolite are disclosed in, for example, Patent Documents 4 to 6.
That is, Patent Document 4 discloses a method of producing olefins from naphtha by using a catalyst containing ZSM-5 to which phosphorus, gallium, germanium, or tin has been added. Patent Document 4 aims to improve the selectivity in generating olefins by inhibiting generation of methane or an aromatic fraction by method of adding phosphorus, and to improve the yield of olefins by securing high activity with a short contact time.
Patent Document 5 discloses a method of producing olefins from heavy hydrocarbons with a high yield, by using a catalyst in which phosphorus is supported on ZSM-5 containing zirconium and a rear-earth metal and a catalyst which contains USY zeolite, REY zeolite, kaolin, silica, and alumina.
Patent Document 6 discloses a method of producing ethylene and propylene with a high yield, by converting hydrocarbons by using a catalyst containing ZSM-5 supporting phosphorus and a transition metal.

As described above, addition of phosphorus to zeolite is disclosed in Patent Documents 4 to 6. However, all of the methods mainly aimed to improve the yield of olefins, and failed to produce monocyclic aromatic hydrocarbons having 6 to 8 carbon number with a high yield. For example, Table 2 of Patent Document 6 discloses the yield of olefins (ethylene and propylene) and BTX (benzene, toluene, and xylene). In the while the yield of olefins is 40 mass%, the yield of BTX is as low as about 6 mass%.
Accordingly, a catalyst for producing monocyclic aromatic hydrocarbons that makes it possible to produce monocyclic aromatic hydrocarbons having 6 to 8 carbon number with a high yield from oil feedstock containing polycyclic aromatic hydrocarbons and to prevent the reduction in the yield of the monocyclic aromatic hydrocarbons caused over time has not practically become known.

### Prior art documents

### Patent documents

[Patent Document 1] Japanese Unexamined Patent Application, First Publication No. H3-2128
[Patent Document 2] Japanese Unexamined Patent Application, First Publication No. H3-52993
[Patent Document 3] Japanese Unexamined Patent Application, First Publication No. H3-26791
[Patent Document 4] Published Japanese Translation No. 2002-525380 of the PCT International Publication
[Patent Document 5] Japanese Unexamined Patent Application, First Publication No. 2007-190520
[Patent Document 6] Published Japanese Translation No. 2007-530266 of the PCT International Publication

### DISCLOSURE OF INVENTION

### Problems to be solved by the invention

The present invention aims to provide a catalyst for producing monocyclic aromatic hydrocarbons that makes it possible to produce monocyclic aromatic hydrocarbons having 6 to 8 carbon number with a high yield from oil feedstock containing polycyclic aromatic hydrocarbons and to prevent the reduction in the yield of monocyclic aromatic hydrocarbons having 6 to 8 carbon number over time, and a production method of monocyclic aromatic hydrocarbons.

### Means to solve the problems

[1] A catalyst for producing monocyclic aromatic hydrocarbons that is for producing monocyclic aromatic hydrocarbons having 6 to 8 carbon number from oil feedstock having a 10 volume% distillation temperature of 140°C or higher and a 90 volume% distillation temperature of 380°C or lower, the catalyst including crystalline aluminosilicate, phosphorus, and a binder, in which the amount of phosphorus is 0.1 to 10 mass% based on the total mass of the catalyst.
[2] The catalyst for producing monocyclic aromatic hydrocarbons according to [1], further including gallium and/or zinc.
[3] The catalyst for producing monocyclic aromatic hydrocarbons according to [2], in which the amount of gallium and/or zinc is 0.02 to 2 mass% based on the total mass of the catalyst.
[4] The catalyst for producing monocyclic aromatic hydrocarbons according to any one of [1] to [3], in which the crystalline aluminosilicate is medium pore size zeolite.
[5] The catalyst for producing monocyclic aromatic hydrocarbons according to any one of [1] to [4], in which the crystalline aluminosilicate is MFI type zeolite.

[6] A production method of monocyclic aromatic hydrocarbons, including a step of bringing oil feedstock having a 10 volume% distillation temperature of 140°C or higher and a 90 volume% distillation temperature of 380°C or lower into contact with the catalyst for producing monocyclic aromatic hydrocarbons according to any one of [1] to [5] to produce monocyclic aromatic hydrocarbons having 6 to 8 carbon number.
[7] The production method of monocyclic aromatic hydrocarbons according to [6], in which the oil feedstock includes light cycle oil generated by a fluidized catalytic cracking.
[8] The production method of monocyclic aromatic hydrocarbons according to [6] or [7], further including a step of bringing the oil feedstock into contact with the catalyst for producing monocyclic aromatic hydrocarbons by using a fluidized-bed reaction equipment.

### Effect of the invention

According to the catalyst for producing monocyclic aromatic hydrocarbons and the production method of monocyclic aromatic hydrocarbons of the present invention, monocyclic aromatic hydrocarbons having 6 to 8 carbon number may be produced with a high yield from oil feedstock containing polycyclic aromatic hydrocarbons, and the reduction in the yield of the monocyclic aromatic hydrocarbons having 6 to 8 carbon number caused over time may be prevented.

### BEST MODE FOR CARRYING OUT THE INVENTION

Hereinafter, an embodiment of the catalyst for producing monocyclic aromatic hydrocarbons and the production method of monocyclic aromatic hydrocarbons of the present invention will be described.

### (Catalyst for producing monocyclic aromatic hydrocarbons)

The catalyst for producing monocyclic aromatic hydrocarbons of the present embodiment (hereinafter, abbreviated to a "catalyst") is for producing monocyclic aromatic hydrocarbons having 6 to 8 carbon number (hereinafter, abbreviated to "monocyclic aromatic hydrocarbons") from oil feedstock containing polycyclic aromatic hydrocarbons and saturated hydrocarbons, and contains crystalline aluminosilicate, phosphorus, and a binder.

### [Crystalline aluminosilicate]

The crystalline aluminosilicate is not particularly limited, but is preferably, for example, pentasil type zeolite or medium pore size zeolite. As the medium pore size zeolite, zeolites having an MFI, MEL, TON, MTT, MRE, FER, AEL, or EUO type crystal structure are more preferable. Particularly, zeolites having an MFI and/or MEL type crystal structure are preferable since they further increase the yield of monocyclic aromatic hydrocarbons.
The zeolites of MFI type, MEL type, and the like belong to zeolites having known types of structures that are publicly introduced by The Structure Commission of the International Zeolite Association (Atlas of Zeolite Structure Types, W. M. Meiyer and D. H. Olson (1978), Distributed by Polycrystal Book Service, Pittsburgh, PA, USA).
Provided that the total amount of the catalyst (total mass of the catalyst) is 100 mass%, the amount of the crystalline aluminosilicate in the catalyst is preferably 10 to 95 mass%, more preferably 20 to 80 mass%, and particularly preferably 25 to 70 mass%. If the amount of the crystalline aluminosilicate is from 10 mass% to 95 mass%, a sufficiently high degree of catalytic activity is obtained.

### [Gallium and zinc]

The catalyst according to the present embodiment may contain gallium and/or zinc. As the form of the catalyst according to the present embodiment that contains gallium and/or zinc, there are the form in which gallium and/or zinc are (is) incorporated into the lattice skeleton of crystalline aluminosilicate (crystalline aluminogallosilicate and/or crystalline aluminozincosilicate), the form in which gallium is supported on crystalline aluminosilicate (gallium-supported crystalline aluminosilicate) and/or the form in which zinc is supported on crystalline aluminosilicate (zinc-supported crystalline aluminosilicate), and the form as a combination of both of them.

The crystalline aluminogallosilicate has a structure in which SiO₄, AlO₄, and GaO₄ structures form tetrahedral coordination in the skeleton, and the crystalline aluminozincosilicate has a structure in which SiO₄, AlO₄, and ZnO₄ structures form tetrahedral coordination in the skeleton. Moreover, the crystalline aluminogallosilicate and/or crystalline aluminozincosilicate are (is) obtained by, for example, crystallization of gel by hydrothermal synthesis, a method of inserting gallium and/or zinc into the lattice skeleton of crystalline aluminosilicate, and a method of inserting aluminum into the lattice skeleton of crystalline gallosilicate and/or crystalline aluminozincosilicate.

The gallium-supported crystalline aluminosilicate and/or zinc-supported crystalline aluminosilicate are (is) a substance in which gallium and/or zinc are (is) supported on crystalline aluminosilicate by a known method such as ion exchange, impregnation, or the like. Examples of the source of gallium or zinc used at this time are not particularly limited and include gallium salts such as gallium nitrate and gallium chloride, gallium oxide, zinc salts such as zinc nitrate and zinc chloride, zinc oxide, and the like.

Provided that the total mass of the catalyst according to the present embodiment is 100 mass%, the amount of gallium and/or zinc in the catalyst is preferably 0.02 to 2 mass%, and the lower limit of the amount is more preferably 0.05 mass% or more. The upper limit thereof is more preferably 1.6 mass% or less, and particularly preferably 1.2 mass% or less. Provided that the total mass of the catalyst is 100 mass%, if the amount of the gallium and/or zinc contained in the catalyst is 0.02 mass% or more, the reduction in the yield of monocyclic aromatic hydrocarbons caused over time can be prevented, and if the amount is 2 mass% or less, the yield of monocyclic aromatic hydrocarbons can be increased.

Provided that the total mass of the crystalline aluminosilicate in the catalyst according to the present embodiment is 100 mass%, the amount of gallium and/or zinc in the catalyst is preferably 0.05 to 5 mass%, and the lower limit of the amount is more preferably 0.1 mass% or higher. The upper limit thereof is more preferably 2 mass% or less, and particularly preferably 1.6 mass% or less. If the amount of gallium and/or zinc contained in the crystalline aluminosilicate in the catalyst is 0.05 mass% or more, the reduction in the yield of monocyclic aromatic hydrocarbons caused over time can be prevented, and if the amount is 5 mass% or less, the yield of monocyclic aromatic hydrocarbons can be increased.

The catalyst according to the present embodiment may be either a catalyst containing gallium or zinc individually or a catalyst containing both of them. Moreover, the catalyst may further contain other metals in addition to gallium and/or zinc.

### [Binder]

The catalyst of the present embodiment contains a binder, and examples of the binder include inorganic oxides. Specific examples thereof include silica, alumina, zirconia, titania, a mixture of these, and the like. Among these, silica and alumina are particularly preferable. If the catalyst contains a binder, moldability or strength is improved, and the catalyst becomes durable regarding long-term use. Moreover, when the catalyst is used in a fluidized bed, the binder is indispensable for improving fluidity or the like.

Provided that the total mass of the catalyst is 100 mass%, the amount of a binder contained in the catalyst is preferably 10 to 80 mass%.
A binder containing phosphorus may be optionally used. In addition, the catalyst may be produced by mixing the binder with crystalline aluminosilicate and then adding gallium and/or zinc and phosphorus thereto, or by mixing a binder or the like with gallium- and/or zinc-supported crystalline aluminosilicate or mixing a binder with crystalline aluminogallosilicate and/or crystalline aluminozincosilicate and then adding phosphorus thereto.

### [Phosphorus]

The catalyst of the present embodiment contains phosphorus. When the binder contains phosphorus, the amount of phosphorus in the catalyst of the present embodiment refers to the sum of the amount of phosphorus contained in the binder and the amount of phosphorus contained in the crystalline aluminosilicate. Provided that the total mass of the catalyst is 100 mass%, the amount of phosphorus is 0.1 to 10 mass%. The lower limit of the amount is preferably 0.2 mass% or more, and the upper limit thereof is preferably 9 mass% or less and more preferably 8 mass% or less. If the amount of phosphorus based on the total mass of the catalyst is 0.1 mass% or more, the reduction in the yield of monocyclic aromatic hydrocarbons caused over time can be prevented, and if the amount is 10 mass% or less, the yield of monocyclic aromatic hydrocarbons can be increased.

It is preferable that the crystalline aluminosilicate in the catalyst of the present embodiment contain phosphorus. Provided that the total mass of the crystalline aluminosilicate is 100 mass%, the amount of phosphorus contained in the crystalline aluminosilicate is preferably 0.1 to 3.5 mass%. The lower limit of the amount is preferably 0.2 mass% or more, and the upper limit thereof is preferably 3 mass% or less and more preferably 2.8 mass% or less. If the amount of phosphorus supported on the crystalline aluminosilicate is 0.1 mass% or more, the reduction in the yield of monocyclic aromatic hydrocarbons caused over time can be prevented, and if the amount is 3.5 mass% or less, the yield of monocyclic aromatic hydrocarbons can be increased.

The method of adding phosphorus to the catalyst and the crystalline aluminosilicate of the present embodiment is not particularly limited, and examples thereof include a method of adding a phosphorus compound to crystalline aluminosilicate, crystalline aluminogallosilicate, or crystalline aluminozincosilicate by ion exchange, impregnation, or the like so as to cause phosphorus to be supported on crystalline aluminosilicate, a method of replacing a portion of the inside of the crystalline aluminosilicate skeleton with phosphorus by adding a phosphorus compound during zeolite synthesis, a method of using a phosphorus-containing crystallization accelerator during zeolite synthesis, and the like. An aqueous phosphate ion-containing solution used at this time is not particularly limited, and it is possible to preferably use solutions that are prepared by dissolving phosphoric acid, diammonium hydrogen phosphate, ammonium dihydrogen phosphate, other water-soluble phosphate, and the like in water at any concentration.

The catalyst of the present embodiment is obtained by baking (at 300°C to 900°C) a catalyst that contains crystalline aluminosilicate, phosphorus, and a binder as described above, a catalyst that contains crystalline aluminosilicate, phosphorus, a binder, and gallium and/or zinc, or a catalyst that contains crystalline aluminogallosilicate and/or crystalline aluminozincosilicate, phosphorus, and a binder.

### [Shape]

The catalyst of the present embodiment is shaped into, for example, powder, granules, pellets, and the like, according to the reaction mode.
For example, the catalyst is shaped into powder in the case of a fluidized bed and shaped into granules or pellets in the case of a fixed bed. An average particle size of the catalyst used in a fluidized bed is preferably 30 to 180 µm, and more preferably 50 to 100 µm. Moreover, a bulk density of the catalyst used in a fluidized bed is preferably 0.4 to 1.8 g/cc, and more preferably 0.5 to 1.0 g/cc.
The average particle size indicates a size of particles accounting for 50 mass% in a particle size distribution obtained by classification performed by sieving, and the density is a value measured by the method of JIS standard R9301-2-3.
In order to obtain the catalyst having a granule or pellet form, an inactive oxide as a binder may be optionally mixed into crystalline aluminosilicate or a catalyst, and then the resultant may be molded using various molding machines.

### (Production method of monocyclic aromatic hydrocarbons)

The production method of monocyclic aromatic hydrocarbons of the present embodiment is a method of bringing oil feedstock into contact with the catalyst to cause a reaction.
Specifically, when the oil feedstock is caused to come into contact with an acid point of the catalyst, various reactions such as cracking, dehydrogenation, cyclization, and hydrogen transfer are caused, whereby polycyclic aromatic hydrocarbons undergo ring opening and are converted into monocyclic aromatic hydrocarbons.

### [Oil feedstock]

The oil feedstock used in the present embodiment is oil having a 10 volume% distillation temperature of 140°C or higher and a 90 volume% distillation temperature of 380°C or lower. If oil having a 10 volume% distillation temperature of lower than 140°C is used, BTX (benzene, toluene, and xylene) is produced from light oil, and this does not fit into the main object of the present embodiment. Accordingly, the 10 volume% distillation temperature of the oil is preferably 140°C or higher, and more preferably 150°C or higher. Moreover, when oil feedstock having a 90 volume% distillation temperature of higher than 380°C is used, the amount of coke deposited onto the catalyst increases, whereby the catalytic activity tends to be rapidly reduced. Accordingly, the 90 volume% distillation temperature of the oil feedstock is preferably 380°C or lower, and more preferably 360°C or lower.

In addition, the 10 volume% distillation temperature, 90 volume% distillation temperature, and endpoint described herein are values measured based on JIS K2254 "Petroleum products-Determination of distillation characteristics".
Examples of the oil feedstock having a 10 volume% distillation temperature of 140°C or higher and a 90 volume% distillation temperature of 380°C or lower include Light Cycle Oil (LCO) generated by a fluidized catalytic cracking, coal-liquefied oil, hydrocracked and refined heavy oil, straight-run kerosene, straight-run light oil, coker kerosene, coker light oil, hydrocracked and refined sand oil, and the like. Among these, Light Cycle Oil (LCO) generated by a fluidized catalytic cracking is more preferable.

If the oil feedstock contains a large amount of polycyclic aromatic hydrocarbons, the yield of monocyclic aromatic hydrocarbons having 6 to 8 carbon number decreases. Accordingly, the amount of polycyclic aromatic hydrocarbons (polycyclic aromatic fraction) in the oil feedstock is preferably 50 volume% or less, and more preferably 30 volume% or less.
In addition, the polycyclic aromatic fraction described herein refers to the sum of the amount of bicyclic aromatic hydrocarbons (bicyclic aromatic fraction) and the amount of aromatic hydrocarbons having three or more rings (aromatic fraction having three or more rings) that are measured based on JPI-5S-49 "Petroleum products-Determination of hydrocarbon types-High performance liquid chromatography".

### [Reaction mode]

As the reaction mode at the time when the oil feedstock is brought into contact with the catalyst and reacted, a fixed bed, a moving bed, a fluidized bed, and the like are exemplified. In the present embodiment, a heavy fraction is used as oil feedstock. Accordingly, a fluidized bed that makes it possible to continuously remove the fraction of coke attached to the catalyst and to stably carry out the reaction is preferable. Particularly, a continuous regeneration-type fluidized bed that can cause the catalyst to circulate between a reactor and regenerator and can continuously repeat reaction-regeneration is preferable. It is preferable that the oil feedstock be brought into contact with the catalyst be in a gaseous state. Moreover, the oil feedstock may be optionally diluted with gas, and when unreacted oil is generated, this may be optionally recycled.

### [Reaction temperature]

The reaction temperature at the time when the oil feedstock is brought into contact with the catalyst and reacted is not particularly limited, and is preferably 350°C to 700°C. The lower limit of the temperature is more preferably 450°C or higher since sufficient reaction activity is obtained. On the other hand, the upper limit thereof is more preferably 650°C or lower since this temperature is advantageous in view of energy and makes it possible to easily regenerate the catalyst.

### [Reaction pressure]

The reaction pressure at the time when the oil feedstock is brought into contact with the catalyst and reacted is preferably 1.5 MPaG or lower, and more preferably 1.0 MPaG or lower. If the reaction pressure is 1.5 MPaG or lower, it is possible to prevent light gas from being additionally generated and to diminish pressure resistance of the reaction device. Though not particularly limited, the lower limit of the reaction pressure is preferably equal to or higher than normal pressure in view of cost and the like.

### [Contact time]

The time for which the oil feedstock comes into contact with the catalyst is not particularly limited as long as a substantially desired reaction is caused. For example, the contact time is preferably 1 second to 300 seconds in terms of the time required for gas on the catalyst to pass. The lower limit of the contact time is more preferably 5 seconds or longer, and the upper limit thereof is more preferably 150 seconds or shorter. If the contact time is 1 second or longer, the reaction can be caused reliably, and if it is 300 seconds or shorter, it is possible to inhibit a carbonaceous substance from being accumulated onto the catalyst by coking or the like, and to suppress the amount of light gas generated by cracking.

In the production method of monocyclic aromatic hydrocarbons of the present embodiment, the oil feedstock is brought into contact with an acid point of the catalyst to cause various reactions such as cracking, dehydrogenation, cyclization, and hydrogen transfer and cause ring opening of polycyclic aromatic hydrocarbons, thereby obtaining monocyclic aromatic hydrocarbons.
In the present embodiment, the yield of monocyclic aromatic hydrocarbons is preferably 15 mass% or more, more preferably 20 mass% or more, and even more preferably 25 mass% or more. If the yield of monocyclic aromatic hydrocarbons is less than 15 mass%, this is not preferable since the concentration of the target substance in the product decreases, and collecting efficiency is lowered.

The production method of the present embodiment described above uses the catalyst described above. Accordingly, with this method, it is possible to produce monocyclic aromatic hydrocarbons with a high yield and to prevent the reduction in the yield of monocyclic aromatic hydrocarbons caused over time.

### EXAMPLES

Hereinafter, the present invention will be described in more detail based on examples and comparative examples, but the present invention is not limited to these examples.

### (Example 1)

A solution (A) containing 1706.1 g of sodium silicate (J sodium silicate No. 3, SiO₂: 28 to 30 mass%, Na: 9 to 10 mass%, balance: water, manufactured by Nippon Chemical Industrial Co., LTD.) and 2227.5 g of water and a solution (B) containing 64.2 g of Al₂(SO₄)₃·14 to 18 H₂O (special grade chemical, manufactured by Wako Pure Chemical Industries, Ltd.), 369.2 g of tetrapropylammonium bromide, 152. 1 g of H₂SO₄ (97 mass%), 326.6 g of NaCl, and 2975.7 g of water were prepared respectively.

Subsequently, while the solution (A) was being stirred at room temperature, the solution (B) was slowly added to the solution (A).
The obtained mixture was vigorously stirred with a mixer for 15 minutes to break up the gel, whereby the mixture was brought into a state of a homogenous fine emulsion.
Thereafter, the mixture was put in a stainless steel autoclave and subjected to crystallization operation under a self-pressure in natural course of events, at temperature of 165°C for 72 hours at a stirring speed of 100 rpm. After the crystallization operation ended, the product was filtered to collect a solid product, and the operation in which the solid product was washed with about 5 L of deionized water and filtered was repeated 5 times. The solid content separated and obtained by filtration was dried at 120°C and baked for 3 hours at 550°C under an air flow.

X-ray diffraction analysis (name of instrument: Rigaku RINT-2500V) was performed on the obtained baked product, and as a result, it was confirmed that the product had an MFI structure. Moreover, a SiO₂/Al₂O₃ ratio (molar ratio) thereof confirmed by X-ray fluorescence analysis (name of instrument: Rigaku ZSX101e) was 64.8. In addition, the amount of elemental aluminum contained in the lattice skeleton that was calculated from the above result was 1.32 mass%.
A 30 mass% aqueous ammonium nitrate solution was added to the obtained baked product in such a ratio that 5 mL of the solution was added to 1 g of the product. The mixture was heated for 2 hours at 100°C and stirred, followed by filtration and washing with water. This operation was repeated 4 times, and then the resultant was dried for 3 hours at 120°C, thereby obtaining ammonium-type crystalline aluminosilicate. Thereafter, baking was performed for 3 hours at 780°C, thereby obtaining proton-type crystalline aluminosilicate.

A mixed solution containing 106 g of sodium silicate (J sodium silicate No. 3, SiO₂: 28 to 30 mass%, Na: 9 to 10 mass%, balance: water, manufactured by Nippon Chemical Industrial Co., LTD.) and pure water was added dropwise to diluted sulfuric acid, thereby preparing an aqueous silica sol solution (SiO₂ concentration of 10.2%). Meanwhile, distilled water was added to 20.4 g of the prepared crystalline aluminosilicate, thereby preparing zeolite slurry. 300 g of the aqueous silica sol solution was added to the zeolite slurry, thereby preparing slurry. Phosphoric acid was added to the prepared slurry such that the amount of phosphorus based on the total amount of the catalyst (herein, the total mass of silica, crystalline aluminosilicate, and phosphorus) became 1.0 mass%. The slurry to which phosphoric acid had been added was spray-dried at 250°C, thereby obtaining a spherical catalyst. Thereafter, the catalyst was baked for 3 hours at 600°C, thereby obtaining a catalyst 1 having a powder shape (hereinafter, called a "powdery catalyst 1") that had an average particle size of 84 µm and a bulk density of 0.74 g/cc.
In the obtained powdery catalyst 1, the amount of phosphorus based on the entire mass (total mass) of the catalyst was 1.0 mass%, and the amount of the silica binder based on the entire mass (total mass) of the catalyst was 60 mass%.

### [Evaluation of catalytic activity after hydrothermal deterioration]

The powdery catalyst 1 was subjected to hydrothermal treatment at a treatment temperature of 650°C for a treatment time of 6 hours in an environment of 100 mass% of water vapor, thereby obtaining a pseudo-deteriorated powder catalyst 1 that had been caused to undergo pseudo-hydrothermal deterioration.
By using a circulation type reaction device including a reactor filled with the obtained pseudo-deteriorated powder catalyst 1, the oil feedstock having properties shown in Table 1 was brought into contact with the pseudo-deteriorated powder catalyst 1 and reacted, under the conditions of a reaction temperature: 550°C and a reaction pressure: 0.1 MPaG At this time, the pseudo-deteriorated powder catalyst 1 was filled in the reaction tube having a diameter of 60 mm. Moreover, nitrogen as a diluent was introduced into the device such that oil feedstock came into contact with the pseudo-deteriorated powder catalyst 1 for 10 seconds.
The reaction was caused for 10 minutes under the above conditions, thereby producing monocyclic aromatic hydrocarbons having 6 to 8 carbon number. By using an FID gas chromatograph directly connected to the reaction device, the composition of the product was analyzed to evaluate the catalytic activity after hydrothermal deterioration. The yield (mass%) of monocyclic aromatic hydrocarbons having 6 to 8 carbon number obtained after hydrothermal deterioration was 27 mass%. The obtained evaluation results are shown in Table 2.

### (Example 2)

A catalyst 2 having a powder shape (hereinafter, called a "powdery catalyst 2") and a pseudo-deteriorated powder catalyst 2 were obtained in the same manner as in Example 1, except that phosphoric acid was added to the prepared slurry such that the amount of phosphorus based on the entire catalyst (herein, the total mass of silica, crystalline aluminosilicate, and phosphorus) became 2.0 mass%. Thereafter, the catalytic activity after hydrothermal deterioration was evaluated in the same manner as in Example 1. The evaluation results are shown in Table 2.
In the obtained powdery catalyst 2, the amount of phosphorus based on the total mass of the catalyst was 2.0 mass%, and the amount of the silica binder based on the total mass of the catalyst was 60 mass%. Moreover, the yield (mass%) of monocyclic aromatic hydrocarbons having 6 to 8 carbon number that was obtained after hydrothermal deterioration was 31 mass%.

### (Example 3)

A catalyst 3 having a powder form (hereinafter, called a "powdery catalyst 3") and a pseudo-deteriorated powder catalyst 3 were obtained in the same manner as in Example 1, except that phosphoric acid was added to the prepared slurry such that the amount of phosphorus based on the total amount of the catalyst (herein, the total mass of silica, crystalline aluminosilicate, and phosphorus) became 4.0 mass%. Thereafter, the catalytic activity after hydrothermal deterioration was evaluated in the same manner as in Example 1. The evaluation results are shown in Table 2.
In the obtained powdery catalyst 3, the amount of phosphorus based on the total mass of the catalyst was 4.0 mass%, and the amount of the silica binder based on the total mass of the catalyst was 60 mass%. Moreover, the yield (mass%) of monocyclic aromatic hydrocarbons having 6 to 8 carbon number that was obtained after hydrothermal deterioration was 28 mass%.

### (Example 4)

A catalyst 4 having a powder form (hereinafter, called a "powdery catalyst 4") and a pseudo-deteriorated powder catalyst 4 were obtained in the same manner as in Example 1, except that phosphoric acid was added to the prepared slurry such that the amount of phosphorus based on the entire catalyst (herein, the total mass of silica, crystalline aluminosilicate, and phosphorus) became 8.0 mass%. Thereafter, the catalytic activity after hydrothermal deterioration was evaluated in the same manner as in Example 1. The evaluation results are shown in Table 2.
In the obtained powdery catalyst 4, the amount of phosphorus based on the total mass of the catalyst was 8.0 mass%, and the amount of the silica binder based on the total mass of the catalyst was 60 mass%. Moreover, the yield (mass%) of monocyclic aromatic hydrocarbons having 6 to 8 carbon number that was obtained after hydrothermal deterioration was 25 mass%.

### (Example 5)

A catalyst 5 having a powder form (hereinafter, called a "powdery catalyst 5") and a pseudo-deteriorated powder catalyst 5 were obtained in the same manner as in Example 1, except that phosphoric acid was added to the prepared slurry such that the amount of phosphorus based on the entire catalyst (herein, the total mass of silica, crystalline aluminosilicate, and phosphorus) became 8.0 mass%, and an aqueous gallium nitrate solution was added to the slurry such that the amount of gallium based on the entire catalyst became 0.16 mass%. Thereafter, the catalytic activity after hydrothermal deterioration was evaluated in the same manner as in Example 1. The evaluation results are shown in Table 2.
In the obtained powdery catalyst 5, the amount of gallium and phosphorus based on the total mass of the catalyst was 0.16 mass% and 8.0 mass% respectively, and the amount of the silica binder based on the total mass of the catalyst was 60 mass%. Moreover, the yield (mass%) of monocyclic aromatic hydrocarbons having 6 to 8 carbon number that was obtained after hydrothermal deterioration was 28 mass%.

### (Example 6)

A catalyst 6 having a powder form (hereinafter, called a "powdery catalyst 6") and a pseudo-deteriorated powder catalyst 6 were obtained in the same manner as in Example 1, except that phosphoric acid was added to the prepared slurry such that the amount of phosphorus based on the entire catalyst (herein, the total mass of silica, crystalline aluminosilicate, and phosphorus) became 8.0 mass%, and an aqueous zinc nitrate solution was added to the slurry such that the amount of zinc based on the entire catalyst became 0.16 mass%. Thereafter, the catalytic activity after hydrothermal deterioration was evaluated in the same manner as in Example 1. The evaluation results are shown in Table 2.
In the obtained powdery catalyst 6, the amount of zinc and phosphorus based on the total mass of the catalyst was 0.16 mass% and 8.0 mass% respectively, and the amount of the silica binder based on the total mass of the catalyst was 60 mass%. Moreover, the yield (mass%) of monocyclic aromatic hydrocarbons having 6 to 8 carbon number that was obtained after hydrothermal deterioration was 27 mass%.

### (Comparative example 1)

A catalyst 7 having a powder form (hereinafter, called a "powdery catalyst 7") and a pseudo-deteriorated powder catalyst 7 were obtained in the same manner as in Example 1, except that phosphoric acid was not added to the prepared slurry. Thereafter, the catalytic activity after hydrothermal deterioration was evaluated in the same manner as in Example 1. The evaluation results are shown in Table 2.
In the obtained powdery catalyst 7, the amount of phosphorus based on the total mass of the catalyst was 0 mass%, and the amount of the silica binder based on the total mass of the catalyst was 60 mass%. Moreover, the yield (mass%) of monocyclic aromatic hydrocarbons having 6 to 8 carbon number that was obtained after hydrothermal deterioration was 7 mass%.

### (Comparative example 2)

A catalyst 8 having a powder form (hereinafter, called a powdery catalyst 8") and a pseudo-deteriorated powder catalyst 8 were obtained in the same manner as in Example 1, except that phosphoric acid was added to the prepared slurry such that the amount of phosphorus based on the entire catalyst (herein, the total mass of silica and crystalline aluminosilicate) became 12.0 mass%. Thereafter, the catalytic activity after hydrothermal deterioration was evaluated in the same manner as in Example 1. The evaluation results are shown in Table 2.
In the obtained powdery catalyst 8, the amount of phosphorus based on the total mass of the catalyst was 12.0 mass%, and the amount of the silica binder based on the total mass of the catalyst was 60 mass%. Moreover, the yield (mass%) of monocyclic aromatic hydrocarbons having 6 to 8 carbon number that was obtained after hydrothermal deterioration was 11 mass%.

**[Table 1]**

| Properties of raw material | | | | Method of analysis |
|---|---|---|---|---|
| Density (measured at 15°C) | | g/cm³ | 0.908 | JIS K 2249 |
| Kinematic viscosity (measured at 30°C) | | mm²/s | 3.645 | JIS K 2283 |
| Distillation properties | Initial boiling point | °C | 177.5 | JIS K 2254 |
| | 10 volume% distillation temperature | °C | 226.5 | |
| | 50 volume% distillation temperature | °C | 276.0 | |
| | 90 volume% distillation temperature | °C | 350.0 | |
| | Endpoint | °C | 377.0 | |
| Composition analysis | Saturated fraction | volume% | 34 | JPI-5S-49 |
| | Olefin fraction | volume% | 8 | |
| | Total aromatic fraction | volume% | 58 | |
| | Monocyclic aromatic fraction | volume% | 23 | |
| | Bicyclic aromatic fraction | volume% | 26 | |
| | Aromatic fraction having 3 or more rings | volume% | 9 | |

**[Table 2]**

| | Catalyst | Amount of phosphorus based on total mass of catalyst (mass%) | Amount of gallium based on total mass of catalyst (mass%) | Amount of zinc based on total mass of catalyst (mass%) | Yield of monocyclic aromatic hydrocarbons having 6 to 8 carbon number (mass%) |
|---|---|---|---|---|---|
| Example 1 | Pseudo-deteriorated powder catalyst 1 | 1.0 | 0 | 0 | 27 |
| Example 2 | Pseudo-deteriorated powder catalyst 2 | 2.0 | 0 | 0 | 31 |
| Example 3 | Pseudo-deteriorated powder catalyst 3 | 4.0 | 0 | 0 | 28 |
| Example 4 | Pseudo-deteriorated powder catalyst 4 | 8.0 | 0 | 0 | 25 |
| Example 5 | Pseudo-deteriorated powder catalyst 5 | 8.0 | 0.16 | 0 | 28 |
| Example 6 | Pseudo-deteriorated powder catalyst 6 | 8.0 | 0 | 0.16 | 27 |
| Comparative example 1 | Pseudo-deteriorated powder catalyst 7 | 0 | 0 | 0 | 7 |
| Comparative example 2 | Pseudo-deteriorated powder catalyst 8 | 12.0 | 0 | 0 | 11 |

From the evaluation results shown in Table 2, it was found that in Examples 1 to 6 using the pseudo-deteriorated powder catalysts 1 to 6, the yield (mass%) of monocyclic aromatic hydrocarbons having 6 to 8 carbon number was 27, 31, 28, 25, 28, and 27 respectively, and monocyclic aromatic hydrocarbons having 6 to 8 were obtained with an excellent yield as the object of the present invention, even after hydrothermal deterioration was caused.
On the other hand, it was found that in Comparative example 1 using the pseudo-deteriorated powder catalyst 7 not containing phosphorus and the Comparative example 2 using the pseudo-deteriorated powder catalyst 8 containing a large amount of phosphorus, the yield (mass%) of monocyclic aromatic hydrocarbons having 6 to 8 carbon number was 7 and 11 respectively, which indicates that the yield was reduced after hydrothermal deterioration, and the catalyst deteriorated markedly, so the catalysts are not practical.

So far, preferable embodiments of the present invention have been described, but the present invention is not limited to the above embodiments. Within a scope that is within the scope of the present invention, the constitutional elements can be added, omitted, substituted, and modified in other ways. The present invention is restricted not by the above description but only by the attached claims.

## Claims

1. A catalyst for producing monocyclic aromatic hydrocarbons that is for producing monocyclic aromatic hydrocarbons having 6 to 8 carbon number from oil feedstock having a 10 volume% distillation temperature of 140°C or higher and a 90 volume% distillation temperature of 380°C or lower, the catalyst comprising:
crystalline aluminosilicate;
phosphorus; and
a binder,
wherein the amount of phosphorus is 0.1 to 10 mass% based on the total mass of the catalyst.

2. The catalyst for producing monocyclic aromatic hydrocarbons according to Claim 1, further comprising gallium and/or zinc.

3. The catalyst for producing monocyclic aromatic hydrocarbons according to Claim 2,
wherein the amount of gallium and/or zinc is 0.02 to 2 mass% based on the total mass of the catalyst.

4. The catalyst for producing monocyclic aromatic hydrocarbons according to any one of Claims 1 to 3,
wherein the crystalline aluminosilicate is medium pore size zeolite.

5. The catalyst for producing monocyclic aromatic hydrocarbons according to any one of Claims 1 to 4,
wherein the crystalline aluminosilicate is MFI type zeolite.

6. A production method of monocyclic aromatic hydrocarbons, comprising a step of bringing oil feedstock having a 10 volume% distillation temperature of 140°C or higher and a 90 volume% distillation temperature of 380°C or lower into contact with the catalyst for producing monocyclic aromatic hydrocarbons according to any one of Claims 1 to 5 to produce monocyclic aromatic hydrocarbons having 6 to 8 carbon number.

7. The production method of monocyclic aromatic hydrocarbons according to Claim 6,
wherein the oil feedstock includes light cycle oil generated by a fluidized catalytic cracking.

8. The production method of monocyclic aromatic hydrocarbons according to Claim 6 or 7, further comprising a step of bringing the oil feedstock into contact with the catalyst for producing monocyclic aromatic hydrocarbons by using a fluidized-bed reaction equipment.
